# EUROPÄISCHE PATENTSCHRIFT

(11) **EP 3 891 873 B1**
(45) Veröffentlichungstag und Bekanntmachung des Hinweises auf die Patenterteilung: **10.12.2025**
(21) Anmeldenummer: 19791227.2
(22) Anmeldetag: 21.10.2019
(51) Int. Cl.: H02K 7/00, H02K 7/14, H02K 1/27, F01D 15/10

(54) **ROTOR FÜR EINE ELEKTRISCHE ANTRIEBSMASCHINE ZUM ANTRIEB EINES VERDICHTERS, EINER TURBINE ODER EINER LADERWELLE EINES ABGASTURBOLADERS UND ABGASTURBOLADER MIT EINER ELEKTRISCHEN ANTRIEBSMASCHINE UND EINEM SOLCHEN ROTOR**
ROTOR FOR AN ELECTRIC DRIVE MACHINE FOR DRIVING A COMPRESSOR, A TURBINE OR A CHARGER SHAFT OF A TURBOCHARGER, AND TURBOCHARGER COMPRISING AN ELECTRIC DRIVE MACHINE AND SUCH A ROTOR
ROTOR POUR MACHINE D'ENTRAÎNEMENT ÉLECTRIQUE POUR ENTRAÎNER UN COMPRESSEUR, UNE TURBINE OU UN ARBRE D'UN TURBOCOMPRESSEUR À GAZ D'ÉCHAPPEMENT ET TURBOCOMPRESSEUR À GAZ D'ÉCHAPPEMENT POURVU D'UNE MACHINE D'ENTRAÎNEMENT ÉLECTRIQUE ET D'UN TEL ROTOR

(30) Priorität: 06.12.2018 DE 102018221138
(43) Veröffentlichungstag der Anmeldung: 13.10.2021
(73) Patentinhaber: Robert Bosch GmbH, 70442 Stuttgart (DE)
(72) Erfinder: SCHEPP, Rene, 71336 Waiblingen (DE); SZULCZYNSKI, Hubert, 71672 Marbach Am Neckar (DE)
(86) Internationale Anmeldenummer: PCT/EP2019/078522
(87) Internationale Veröffentlichungsnummer: WO 2020/114662

(56) Entgegenhaltungen:
- EP-A1- 2 511 532
- EP-B1- 2 511 532
- WO-A1-89/11752
- CN-A- 108 054 867
- DE-A1- 102007 028 356
- GB-A- 2 551 450
- US-A1- 2004 051 416
- US-A1- 2005 123 417
- US-A1- 2018 062 467

## Beschreibung

### Stand der Technik

Aus dem Stand der Technik sind verschiedene elektrische Antriebsmaschinen für einen Abgasturbolader bekannt. So offenbart beispielsweise die DE 10 2017 207 532 A1 einen Abgasturbolader mit einer elektrischen Antriebsmaschine. Derartige Abgasturbolader werden insbesondere im Kraftfahrzeugbau dazu genutzt, die Luftfüllung in Zylindern einer Brennkraftmaschine zu erhöhen, um die Leistung der Brennkraftmaschine zu steigern. Dabei wird ein Abgasturbolader mit einer elektrischen Antriebsmaschine versehen, um die Laderwelle des Abgasturboladers, auf welcher ein Verdichterrad sowie ein Turbinenrad angeordnet sind, anzutreiben. Mittels der elektrischen Antriebsmaschine kann unabhängig von einem Abgasstrom der Brennkraftmaschine angesaugte Frischluft verdichtet und der Brennkraftmaschine mit erhöhtem Ladedruck zugeführt werden. Hierdurch kann beispielsweise der ansonsten zeitlich verzögerte Ladedruckaufbau maßgeblich beschleunigt werden.

Eine derartige elektrische Antriebsmaschine weist üblicherweise einen Stator mit einer mehrphasigen Antriebswicklung zur Erzeugung eines Antriebsmagnetfeldes und einen Rotor auf. Der Rotor weist wenigstens einen Permanentmagneten auf und wird drehfest auf der Welle des Abgasturboladers angeordnet. Die Realisierung der elektromotorischen Unterstützung durch eine in den Verdichter oder die Turbine integrierte elektrische Antriebsmaschine hat den Vorteil, dass die motorische Unterstützung besonders bauraumsparend in dem Abgasturbolader angeordnet werden kann. Durch Bestromung der Phasen der Antriebswicklung mittels einer dafür vorgesehenen Leistungselektronik wird das drehende Antriebsmagnetfeld erzeugt, durch welches der durch die Laderwelle drehbar gelagerte Rotor mit einem vorgebbaren Drehmoment angetrieben wird. Der Permanentmagnet wirkt dabei mit dem drehenden Magnetfeld zusammen. Bei der aus der DE 10 2017 207 532 A1 bekannten elektrischen Antriebsmaschine weist der Rotor einen konzentrisch um eine Drehachse des Rotors ausgebildeten Rotorkörper auf, wobei an dem Rotorkörper eine Aufnahme für wenigstens einen Permanentmagneten ausgebildet ist, wobei wenigstens ein Permanentmagnet in der Aufnahme des Rotorkörpers angeordnet ist. Die aus der DE 10 2017 207 532 A1 bekannte elektrische Antriebsmaschine verwendet einen vorteilhaften Aufbau, bei dem der einzige Strömungsweg des Mediums durch den Stator der Medienspaltmaschine hindurch gebildet ist.

Weiterhin ist aus der WO 2008/141710 A1 eine elektrische Antriebsmaschine zum Antrieb eines Verdichters eines Abgasturboladers bekannt, bei welcher der Rotorkörper eines Rotors der elektrischen Antriebsmaschine mittels einer Gewindebuchse an einer Laderwelle des Abgasturboladers befestigbar ist.

Aus der US 2018/062467 A1 ist ein Rotor für eine elektrische Antriebsmaschine zum Antrieb einer Laderwelle eines Abgasturboladers bekannt, der einen um eine Drehachse des Rotors ausgebildeten Rotorkörper aufweist, an dem eine Aufnahme für einen Permanentmagneten ausgebildet ist, wobei der Rotorkörper mittels einer Gewindebuchse an einer Laderwelle des Abgasturboladers befestigbar ist. Der Rotorkörper weist eine sich in Richtung Drehachse erstreckende weitere Aufnahme aufweist, in der die Gewindebuchse innerhalb des Rotorkörpers angeordnet ist, wobei die weitere Aufnahme relativ zu der Aufnahme des wenigstens einen Permanentmagneten in Richtung der Drehachse versetzt in dem Rotorkörper angeordnet ist.

### Offenbarung der Erfindung

Der hier vorgestellte Rotor für eine elektrische Antriebsmaschine zum Antrieb eines Verdichters, einer Turbine oder einer Laderwelle eines Abgasturboladers, weist einen um eine Drehachse des Rotors ausgebildeten Rotorkörper auf, wobei an dem Rotorkörper eine Aufnahme für wenigstens einen Permanentmagneten ausgebildet ist und wenigstens ein Permanentmagnet in der Aufnahme des Rotorkörpers angeordnet ist. Der Rotorkörper ist vorteilhaft mittels einer Gewindebuchse an einer Laderwelle des Abgasturboladers befestigbar. Erfindungsgemäß wird vorgeschlagen, dass der Rotorkörper eine sich in Richtung der Drehachse erstreckende weitere Aufnahme aufweist, in der die Gewindebuchse innerhalb des Rotorkörpers angeordnet ist, wobei die weitere Aufnahme relativ zu der Aufnahme des wenigstens einen Permanentmagneten in Richtung der Drehachse versetzt in dem Rotorkörper angeordnet ist und wobei ein Innendurchmesser der weiteren Aufnahme größer ausgebildet ist als ein Außendurchmesser der Gewindebuchse, so dass senkrecht zur Drehachse zwischen der Gewindebuchse und dem Rotorkörper in radialer Richtung ein Spiel besteht.

Weiterhin bezieht sich die Erfindung auf einen Abgasturbolader mit einer elektrischen Antriebsmaschine zum Antrieb eines Verdichters, einer Turbine oder einer Laderwelle des Abgasturboladers, wobei die Laderwelle um eine Drehachse drehbar gelagert ist, und die elektrische Antriebsmaschine einen wie oben beschrieben aufgeführten Rotor und einen Stator aufweist, wobei der Stator eine Antriebswicklung zur Erzeugung eines den Rotor antreibenden Antriebsmagnetfeldes aufweist, wobei der Rotorkörper mittels der Gewindebuchse auf ein Außengewinde der Laderwelle derart aufgeschraubt ist, dass eine in Richtung der Drehachse wirkende axiale Spannkraft den Rotorkörper mittelbar oder unmittelbar gegen einen Anschlag an der Laderwelle anpresst.

### Vorteile der Erfindung

Ein wichtiger technischer Zusammenhang bei der Entwicklung einer elektrischen Antriebsmaschine eines elektrisch unterstützten Abgasturboladers ist in dem Verhältnis zwischen dem Drehmoment der elektrischen Antriebsmaschine und dem Massenträgheitsmoment der Läufergruppe des Turboladers zu sehen. Die Masse des auf der Laderwelle montierten Rotors der elektrischen Antriebsmaschine führt im Vergleich zu einem Abgasturbolader ohne elektrische Antriebsmaschine zu einer zusätzlichen Belastung an der Laderwelle und den zugeordneten Lagerbuchsen. Das hohe Drehzahlniveau des Abgasturboladers stellt dabei eine besondere Schwierigkeit dar. Es ist wichtig, dass der Gesamtaufbau auch bei hohen Drehzahlen mechanisch und elektrisch stabil ist. Durch die Zusatzmasse des Rotors wird die Masse der gesamten auf der Laderwelle montierten Läuferanordnung erhöht. Dies bedeutet nicht nur eine Steigerung des Massenträgheitsmoments des Laders, sondern auch eine Verschiebung der Massenschwerpunkt nahezu in das Zentrum einer der Lagerbuchsen der Laderwelle. Dieser Effekt kann sich negativ auf die resultierende Lagerbelastung auswirken, da die Flächenpressung in den beiden Laufflächen der Lagerbuchsen stark variieren kann.

Neben der mit den Drehmomenten und Massenträgheitsmomenten verbundenen Problematik stellt der Wärmestrom von der Turbine in den Lagerbock eine weitere Herausforderung dar. Insbesondere bei Ottomotoren kann dieser Wärmestrom dazu führen, dass die Permanentmagnete des Rotors im ungünstigen Fall entmagnetisiert werden.

Der hier vorgeschlagene Rotor ermöglicht die Ausbildung einer elektrischen Antriebsmaschine, welche eine Lösung für die oben dargelegte technische Problemstellung darstellt. Der erfindungsgemäße Rotor ermöglicht es vorteilhaft, eine elektrische Antriebsmaschine mit einer möglichst kleinen Unwucht der Läuferanordnung, bestehend aus Laderwelle, Verdichter- bzw. Turbinenrad und Rotor, zu erzeugen. Darüber hinaus kann der Permanentmagnet des Rotors vor schädlichen Umwelteinflüssen, insbesondere Abgasen und Kondensaten, geschützt werden und somit eine Korrosion vermieden oder zumindest reduziert werden. Weiterhin wird verhindert, dass ein zu hoher Wärmeeintrag den Permanentmagneten entmagnetisiert.

Dadurch, dass der Rotorkörper eine sich in Richtung Drehachse erstreckende weitere Aufnahme aufweist, in der die Gewindebuchse innerhalb des Rotorkörpers angeordnet ist, wobei die weitere Aufnahme relativ zu der Aufnahme des wenigstens einen Permanentmagneten in Richtung der Drehachse versetzt in dem Rotorkörper angeordnet ist, wird erreicht, dass auch bei einer Verwendung einer Gewindebuchse zur Montage des Rotors die Laderwelle nicht durch den Rotormagneten hindurch geführt werden muss. Der Durchmesser des Rotormagneten kann vorteilhaft recht klein gewählt werden, was sich bezüglich der Massenträgheit des Rotors positiv auswirkt. In vorteilhafter Weise kann der erfindungsgemäß ausgebildete Rotor auf eine Laderwelle aufgeschraubt werden, ohne dass sich der Schwerpunkt der Läuferbraugruppe zu sehr verschiebt. Die Stabilität des Rotorlaufes wird somit im Vergleich zu einem Abgasturbolader ohne elektrischen Zusatzantrieb kaum negativ zu beeinflusst. Zusätzlich wird durch dieses Merkmal erreicht, dass weitere Freiheitsgrade bei der Anordnung des wenigstens einen Permanentmagneten in der Aufnahme des Rotorkörpers bestehen, so dass der Permanentmagnet ohne die ihn durchringende Laderwelle besser gegen Korrosion geschützt werden kann und der Aufbau insgesamt robuster ausgebildet ist.

Erfindungsgemäß ist vorgesehen, dass ein Innendurchmesser der weiteren Aufnahme größer ausgebildet ist als ein Außendurchmesser der Gewindebuchse, so dass senkrecht zur Drehachse zwischen der Gewindebuchse und dem Rotorkörper in radialer Richtung ein Spiel besteht. Da der Rotorkörper des Rotors möglichst konzentrisch zu Laderwelle des Abgasturboladers ausgerichtet werden sollte, um eine möglichst geringe Unwucht des Gesamtsystems zu erzeugen, ist es vorteilhaft, wenn die zur Befestigung des Rotors verwandte Schraubverbindung einen radialen Toleranzausgleich zulässt. Durch das Spiel zwischen Gewindebuchse und Rotorkörper fungiert die Gewindebuchse quasi als "schwimmende" Buchse, so dass die Zentrierung der Drehachse des Rotors auf der Drehachse der Laderwelle vereinfacht mittels eines von der Verschraubung unabhängigen Ausrichtungsmittels vorgenommen werden kann, wie noch erläutert wird.

Der Begriffe Aufnahme und weitere Aufnahme bezeichnen beliebige Vertiefungen, welche eingerichtet sind, um mindestens ein beliebiges Objekt zu halten, insbesondere in einer gewünschten Position, und/oder das Objekt von einer Umgebung des Objekts zu trennen. Die Aufnahme kann daher einen Hohlraum aufweisen. Der Hohlraum kann eine Form aufweisen, welche komplementär zu dem Objekt ist. Das Objekt kann Abmessungen aufweisen welche vorzugsweise kleiner sind als die Abmessungen der Aufnahme. Das Objekt kann derart in der Aufnahme angeordnet sein, dass sich das Objekt in der Aufnahme bewegen kann. Die Aufnahme kann jedoch auch derart ausgebildet sein, dass eine Bewegung des Objekts innerhalb der Aufnahme vermieden oder zumindest reduziert ist. Dabei können Wände der Aufnahme in Kontakt stehen mit Oberflächen des Objekts. Die Aufnahme kann sich entlang einer Achse erstecken. Insbesondere kann sich eine Längsachse der Aufnahme parallel zu einer Längsachse des Rotors erstecken.

Vorteilhafte Ausgestaltungen und Weiterbildungen der Erfindung werden durch die in den abhängigen Ansprüchen enthaltenen Merkmale ermöglicht.

Vorteilhaft weist die Gewindebuchse ein Innengewinde und einen Außenmantel auf, wobei der Außenmantel der Gewindebuchse bei einer Drehung um die Drehachse relativ zu dem Rotorkörper an einer Innenwandung der weiteren Aufnahme zur Anlage gelangt. Dadurch wird vorteilhaft erreicht, dass der Rotorkörper mittels eines an dem Rotorkörper angesetzten Werkzeugs auf die Laderwelle aufgeschraubt werden kann, indem sich die Gewindebuchse beim Aufschrauben an der Innenwandung der weiteren Aufnahme als Gegenhalt abstützt, so dass die entsprechende axiale Spannkraft beim Aufschrauben aufgebracht werden kann. Die Gewindebuchse kann ein Fein- bzw. ein Regelgewinde aufweisen, mittels dem eine definierte Axialkraft aufgebracht werden kann.

Eine Korrosion des wenigstens einen Permanentmagneten kann vorteilhaft vermieden werden, indem der Rotorkörper eine den wenigstens einen Permanentmagneten umgebende Hülse aufweist. Die Hülse stellt quasi eine Bandagierung oder Armierung für den wenigstens einen Permanentmagneten dar, um diesen auch bei hohen Zentrifugalkräften und harschen Temperatureinflüssen am Abgasturbolader wirksam zu schützen. Die Hülse sollte die magnetischen Eigenschaften des Permanentmagneten und des Stators nicht beeinflussen. Somit sollte der Werkstoff der Hülse unmagnetisch sein. Außerdem kann die Hülse vorteilhaft eine geringe Wandstärke aufweisen, da diese ebenfalls Einfluss auf den Magnetfluss hat.

Die Hülse kann an einem Anschlusselement des Rotorkörpers angeordnet sein, wobei die weitere Aufnahme für die Gewindebuche in dem Anschlusselement angeordnet ist. Vorteilhaft kann das Anschlusselement einen Außenmantel, eine dem wenigstens einen Permanentmagneten zuweisende Innenseite und eine davon abweisende Außenseite aufweisen, wobei die weitere Aufnahme als eine an der Innenseite des Anschlusselementes ausgebildete Absenkung ausgebildet sein kann. Ein derartiges Anschlusselement kann preiswert als einfaches Drehteil aus beispielsweise Edelstahl, (insbesondere aus Edelstahl X5CrNiCuNb16-4) gefertigt werden. Die Gewindebuchse kann in der weiteren Aufnahme des Anschlusselements mit radialem und axialem Spiel aufgenommen sein und von der Innenseite aus eingelegt werden.

Besonders vorteilhaft ist es, wenn die Hülse unabhängig von dem Anschlusselement hergestellt und an dem fertigen Anschlusselement befestigt wird. Der gesamte Aufbau des Rotorkörpers ist einfach und preisgünstig herstellbar. Der wenigstens eine Permanentmagnet (beispielsweise ein Magnet aus SmCo, Sm2Co17 oder NdFeB) kann vorteilhaft in die Hülse eingepresst werden. Die Hülse kann beispielsweise als Rohrhalbzeug aus einem unmagnetischem Material bestehen (beispielsweise Inconel^{®}718, Nickellegierungen, Titan oder Feinkornhartmetall).

Der wenigstens eine Permanentmagnet hat die Aufgabe mittels eines Magnetfeldes, das über den Stator induziert wird, den Abgasturbolader anzutreiben. Folglich muss der Pressverband zwischen Permanentmagnet und Hülse ausreichend dimensioniert sein, um das erforderliche Drehmoment übertragen zu können. Hierzu ist es vorteilhaft, wenn zwischen der Innenseite des Anschlusselementes und dem wenigstens einen Permanentmagneten eine die Gewindebuchse an der Innenseite des Anschlusselementes abdeckende Stützscheibe vorgesehen ist. Weiterhin kann der Rotorkörper auf einer von der Gewindebuchse abgewandten Seite des Permanentmagneten eine weitere Stützscheibe aufweisen. Die Stützscheiben können aus dem gleichen Material wie die Hülse bestehen. Bei einem Presssitz des Permanentmagneten in der Hülse könnten ohne die Stützscheiben und das Anschlusselement am Austritt der Hülse höhere Fugenpressungen und Tangentialspannungen auftreten. Die Stützscheiben schützen vorteilhaft den Permanentmagneten vor hohen mechanischen Belastungen während der Verpressung in der Hülse insbesondere an dessen Kanten. Bei der Fertigung des Rotors kann die Hülse über die Magneteinheit bestehend aus Stützscheiben und Permanentmagnet aufgepresst werden. Die Hülse mit der montierten Magnetbaugruppe kann anschließend radial mit dem Anschlusselement verschweißt werden. Axial wird der Permanentmagnet über die Stützscheiben abgeschützt. Die weitere Stützscheibe an der Stirnseite des Rotorkörpers kann nach der Montage am Anschlusselement axial mit der Hülse verschweißt werden.

Vorteilhaft kann der Rotorkörper konzentrisch zu der Drehachse eine zylindrische Bohrung aufweist, welche der Einführung der Laderwelle dient. Dadurch, dass der Innendurchmesser der zylindrischen Bohrung kleiner ausgebildet ist, als ein Innendurchmesser der weiteren Aufnahme ist eine Stufe gebildet, die eine Auflage für die Gewindebuchse bildet. Die Bohrung kann vorteilhaft mit einem Zentrierdurchmesser ausgebildet sein, so dass beispielsweise durch eine Spielpassung oder auch durch ein Aufpressen der Innenwandung der Bohrung auf den Außendurchmesser der Laderwelle eine Zentrierung des Rotorkörpers an der Laderwelle unabhängig von der Verschraubung mittels der Gewindebuchse realisierbar ist.

Weiterhin vorteilhaft ist ein Abgasturbolader mit einer elektrischen Antriebsmaschine zum Antrieb eines Verdichters, einer Turbine oder einer Laderwelle des Abgasturboladers, wobei die Laderwelle um eine Drehachse drehbar gelagert ist, und die elektrische Antriebsmaschine einen Rotor und einen Stator aufweist, wobei der Stator eine Antriebswicklung zur Erzeugung eines den Rotor antreibenden Antriebsmagnetfeldes aufweist, wobei der Rotor einen um die Drehachse ausgebildeten Rotorkörper aufweist, wobei an dem Rotorkörper eine Aufnahme für wenigstens einen Permanentmagneten ausgebildet ist, wobei wenigstens ein Permanentmagnet in der Aufnahme des Rotorkörpers angeordnet ist, wobei der Rotorkörper mittels einer Gewindebuchse auf ein Außengewinde der Laderwelle derart aufgeschraubt ist, dass eine in Richtung der Drehachse wirkende axiale Spannkraft den Rotorkörper mittelbar oder unmittelbar gegen einen Anschlag an der Laderwelle anpresst. Erfindungsgemäß weist der Rotorkörper eine sich in Richtung der Drehachse erstreckende weitere Aufnahme auf, in der die Gewindebuchse innerhalb des Rotorkörpers angeordnet ist, wobei die weitere Aufnahme relativ zu der Aufnahme des wenigstens einen Permanentmagneten in Richtung der Drehachse versetzt in dem Rotorkörper angeordnet ist. Die Aufbringung der axialen Spannkraft mittels der Verschraubung an der Laderwelle kann vorteilhaft unabhängig von der Zentrierung des Rotorkörpers relativ zur Laderwelle erfolgen.

Besonders vorteilhaft ist es in diesem Zusammenhang, wenn der Rotorkörper konzentrisch zu der Drehachse eine zylindrische Bohrung aufweist, wobei der Innendurchmesser der zylindrischen Bohrung zum Ausbilden einer Spielpassung oder einer Übermaßpassung zwischen der Laderwelle und der Innenwandung der Bohrung ausgebildet ist. Dadurch wird vorteilhaft ermöglicht, den Rotor mittels einer Schraubverbindung an die Laderwelle anzuschrauben und gleichzeitig mit einem zylindrischen Pressverband oder einer Spielpassung relativ zur Wellenachse beziehungsweise Drehachse der Laderwelle auszurichten. Somit ist der Rotor optimal zur Wellenachse ausgerichtet, was sich positiv auf die Unwucht des Systems auswirkt. Der Rotor kann während der Montage Drehwinkelgesteuert angezogen werden, um die geforderte Axialkraft zu garantieren. Eine Spielpassung anstelle der Presspassung in diesem Bereich ist ebenfalls möglich. Bei einer Spielpassung ist eine Wuchtung des Gesamtaufbaus empfehlenswert, um Unwucht im System zu vermeiden.

Damit der Rotor problemlos verschraubt werden kann, kann ein radialer Toleranzausgleich vorgesehen sein, der mittels einer in der weiteren Aufnahme mit radialem Spiel angeordneten Gewindebuchse realisiert wird. Der Rotor kann in einfacher Weise mittels eines Zweiflachs oder eines Sechskants und/oder mittels einer Spannzange oder in ähnlicher Weise auf die Laderwelle aufgeschraubt werden.

Vorteilhaft kann die in Richtung der Drehachse wirkende axiale Spannkraft den Rotorkörper gegen ein Verdichterrad des Verdichters und das Verdichterrad gegen einen Anschlag an der Laderwelle anpressen. Somit kann mittels des Rotors eine axiale Vorspannung auf das Verdichterrad vorgenommen werden. Die Axialkraft dient vorteilhaft zur lagerichtigen Fixierung des Verdichterrades bei hohen Drehzahlen.

### Kurze Beschreibung der Zeichnung

Es zeigen:
Fig. 1 eine schematische Schnittansicht eines Abgasturboladers mit einer elektrischen Antriebsmaschine gemäß einer Ausführungsform der Erfindung,
Fig. 2 einen Rotor der elektrischen Antriebsmaschine in einer gegenüber Fig. 1 leicht veränderten zweiten Ausführungsform,
Fig. 3 eine perspektivische Ansicht eines Rotors gemäß einer dritten Ausführungsform,
Fig. 4 eine perspektivische Ansicht eines Rotors gemäß einer vierten Ausführungsform,
Fig. 5 eine perspektivische Ansicht eines Spannwerkzeuges,
Fig. 6a bis 6c Querschnitte durch eine Magnetbaugruppe, während der Herstellung,
Fig. 7a bis 7e weitere Querschnitte durch die Magnetbraugruppe und den Rotorkörper während der Herstellung des Rotors.

### Ausführungsformen der Erfindung

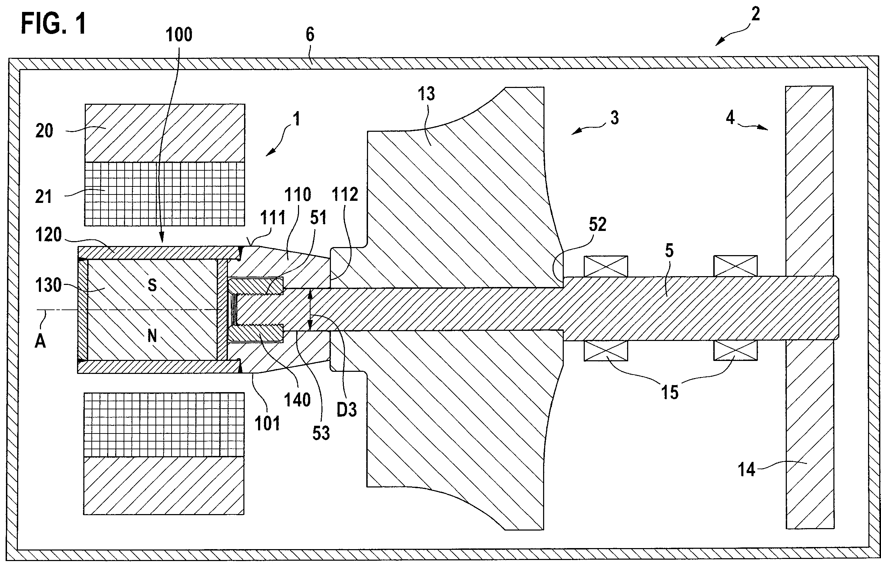

Fig. 1 zeigt einen Längsschnitt durch einen Abgasturbolader 2 einer Brennkraftmaschine mit einer elektrischen Antriebsmaschine 1. Der Abgasturbolader umfasst eine hier nur schematisch dargestelltes Gehäuse 6, das insbesondere auch mehrteilig mit einem Lagergehäuse einem nicht dargestellten Verdichtergehäuse und Turbinengehäuse ausgeführt sein kann. Der Abgasturbolader umfasst einen Verdichter 3 und eine Turbine 4. In Fig. 1 ist ein Verdichterrad 13 des Verdichters 3 und ein Turbinenrad 14 der Turbine 4 schematisch eingezeichnet. Das Verdichterrad 13 und das Turbinenrand 14 können auf einer gemeinsamen Laderwelle 5 drehfest angeordnet sein. Die Laderwelle 5 ist in Lagerbuchsen 15 in dem Gehäuse 6 des Abgasturboladers 2 um eine Drehachse A drehbar gelagert.

Die Turbine 4 kann als rotierende Strömungsmaschine verstanden werden, welche eingerichtet ist, ein Abfallen einer inneren Energie eines strömenden Fluides in eine mechanische Leistung umzuwandeln, welche sie über die Laderwelle 5 abgibt. Einem Fluidstrom kann durch eine möglichst wirbelfreie laminare Umströmung von Turbinenschaufeln ein Teil einer inneren Energie, insbesondere umfassend Bewegungsenergie, Lageenergie und/oder Druckenergie entzogen werden, welcher auf Laufschaufeln der Turbine übergehen kann. Über den Teil der inneren Energie kann dann die Laderwelle 5 in Drehung versetzt werden und eine nutzbare Leistung kann an eine angekuppelte Arbeitsmaschine, wie einen Verdichter 3 abgegeben werden. Die Turbine 4 kann eingerichtet sein, um von Auspuffgasen eines Verbrennungsmotors angetrieben zu werden.

Der Verdichter 3 ist eingerichtet um einen Druck und/oder eine Dichte eines strömenden Gases und insbesondere strömender Luft zu erhöhen. Der Verdichter kann insbesondere ein Radialverdichter sein. Der Radialverdichter kann eingesetzt sein, um durch einen rotierenden Läufer nach den Gesetzen der Strömungsmechanik einem strömenden Fluid Energie zuzusetzen. Der Radialverdichter kann derart ausgebildet sein, dass das Gas im Wesentlichen axial in ein Verdichterrad 13 strömt und anschließend radial, d.h. nach außen abgelenkt wird.

Die elektrischen Antriebsmaschine 1 ist eingerichtet, um durch Anlegen eines elektrischen Stroms eine Rotationsbewegung eines Rotors zu generieren. Die elektrische Antriebsmaschine ist ganz oder teilweise als Elektromotor ausgestaltet. Insbesondere wird die elektrische Antriebsmaschine verwendet, um den Verdichter, die Turbine oder die Laderwelle 5 des Abgasturboladers 2 anzutreiben. Die elektrische Antriebsmaschine 1 kann insbesondere wie die in der DE 10 2017 207 532 A1 beschriebene elektrische Antriebsmaschine in einem Abgasturbolader verbaut werden, wobei die hier vorgestellte elektrische Antriebsmaschine einen gegenüber der DE 10 2017 207 532 A1 neuartigen Aufbau des Rotors aufweist, der eine vorteilhafte Anbindung an die Laderwelle ermöglicht.

Die elektrische Antriebsmaschine weist einen Rotor 100 und einen Stator 20 auf. Der Stator 20 bildet ein feststehendes Bauteil der elektrischen Antriebsmaschine 1 und weist beispielsweise ein kreisringförmiges Statorjoch sowie radial nach innen von dem Statorjoch vorstehende Statorzähne auf, die in Umfangsrichtung gesehen beabstandet voneinander gleichmäßig verteilt angeordnet sind. Die Statorzähne sind üblicherweise von einer mehrphasigen Antriebswicklung 21 umwickelt, wobei durch Bestromung der Phasen der Antriebswicklung 21 mittels einer dafür vorgesehenen Leistungselektronik das drehende Antriebsmagnetfeld erzeugt wird, durch welches der durch die Laderwelle 5 drehbar gelagerte Rotor 100 mit einem vorgebbaren Drehmoment angetrieben wird. Der Rotor 100 weist einen Rotorkörper 101 auf, welcher dazu eingerichtet ist, wenigstens einen Permanentmagneten 130 aufzunehmen. Der Rotorkörper 100 kann aber auch mehr als einen Permanentmagneten 130 aufnehmen. Der Rotor 100 wirkt mit dem drehenden Magnetfeld des Stators 20 zusammen. Der Rotorkörper 101 des Rotors 100 ist als Rotationskörper um eine Drehachse A herum ausgebildet, insbesondere konzentrische um die Drehachse A ausgebildet. Vorzugsweise ist die Drehachse A des Rotorkörpers 101 identisch mit der Drehachse der Laderwelle 5. An dem Rotorkörper 101 ist eine Aufnahme 190 für den wenigstens einen Permanentmagneten 130 ausgebildet. Der Rotorkörper 101 ist mittels einer Gewindebuchse 140 auf ein Außengewinde 51 der Laderwelle 5 derart aufgeschraubt, dass eine aus der Verschraubung resultierende und in Richtung der Drehachse A wirkende axiale Spannkraft den Rotorkörper 101 unmittelbar oder mittelbar unter Zwischenlage des Verdichterrades 13 und gegebenenfalls weiterer Bauteile, beispielsweise eines Axiallagers der Laderwelle 5, gegen einen Anschlag 52 an der Laderwelle 5 anpresst. Die Laderwelle 5 kann wie dargestellt einteilig ausgebildet sein. Die Laderwelle 5 kann aber auch mehrteilig ausgebildet sein und eine an den Rotor angebundene Rotorwelle aufweisen, welche drehfest mit der Laderwelle beispielsweise über eine Kupplungsvorrichtung koppelbar ist. Die Laderwelle 5 weist einen zylindrischen Außenmantel auf, der an seinem dem Rotor 100 zuweisenden Ende mit dem Außengewinde 51 versehen ist.

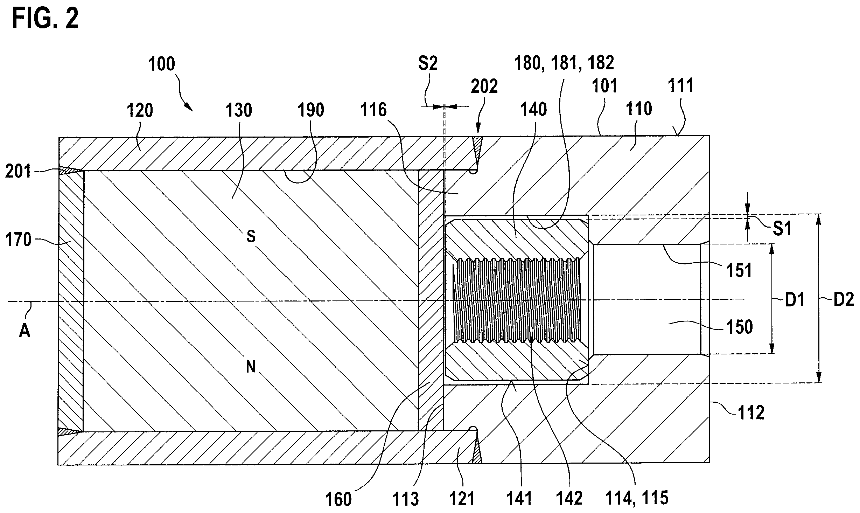

Zunächst wird der Aufbau des Rotors 100 anhand der Fig. 2 genauer beschrieben. Der Rotor 100 ist vorzugsweise mehrteilig aufgebaut und weist zumindest den Rotorkörper 101, die Gewindebuchse 140 und den wenigstens einen Permanentmagneten 130 auf. Der Permanentmagnet weist, wie dargestellt, wenigstens einen Nord- und Südpol auf und kann beispielsweise ein Magnet aus SmCo, Sm2Co17 oder NdFeB sein. Der Rotorkörper 101 ist besonders bevorzugt ebenfalls mehrteilig aufgebaut. Insbesondere weist der Rotorkörper 101 eine den Permanentmagneten 130 umgebende Hülse 120 auf, wobei die Hülse 120 an einem Anschlusselement 110 des Rotorkörpers 101 angeordnet ist. Der Begriff "Hülse" bezeichnet grundsätzlich einen beliebigen, länglichen Hohlkörper. Der Hohlkörper kann eine Länge und einen Durchmesser aufweisen. Die Länge kann größer sein als der Durchmesser, beispielsweise um einen Faktor von 1,5, vorzugsweise um einen Faktor von 2, besonders bevorzugt um einen Faktor von 3. Der Durchmesser kann insbesondere eine runde Form aufweisen. Auch andere Ausgestaltungen sind jedoch grundsätzlich denkbar. Die Hülse kann daher auch als "Rohr" bezeichnet werden. Die innere zylinderförmige Wandung der Hülse 120 bildet eine Aufnahme 190 für den Permanentmagneten 130. Der Permanentmagnet 130 ist insbesondere in die Hülse 120 eingepresst, wie weiter unten noch erläutert wird. Die Hülse kann insbesondere aus einem nicht-magnetischen Material hergestellt sein. Dadurch kann ein Einfluss der Hülse auf magnetische Eigenschaften des Permanentmagneten und/oder des Stators vermieden oder zumindest weitergehend reduziert sein. Die Hülse kann weiterhin eingerichtet sein, den Permanentmagneten, insbesondere radial, vor Korrosion zu schützen. Bei höheren Drehzahlen kann der Permanentmagnet stärker verpresst und/oder bandagiert werden damit er nicht durch die Fliehkräfte beschädigt wird. Eine höhere Verpressung kann zu einer Zunahme der Spannung in der Hülse führen, die wiederum durch ein Anheben der Wandstärke reduziert werden kann. Beispielsweise kann die Hülse aus dem Material NiCr19Fe19Nb5Mo3 gebildet sein. Die Hülse kann eine Wandstärke von 0,1 mm bis 5 mm, insbesondere von 0,5 mm bis 2 mm, vorzugsweise von 0,8 mm bis 1,5 mm und besonders bevorzugt von 1,025 mm aufweisen.

Das Anschlusselement 110 kann einen zylindrischen Außenmantel 111, eine dem wenigstens einen Permanentmagneten 130 zuweisende Innenseite 113 und eine davon abweisende Außenseite 112 aufweisen. Das Anschlusselement 110 kann beispielswiese als einfaches Drehteil aus Edelstahl hergestellt sein. An der Innenseite 113 des Anschlusselementes 110 ist konzentrisch zu der Drehachse A eine Absenkung 182 ausgebildet, die eine weitere Aufnahme 180 für die Gewindebuche 140 ausbildet. Zwischen der Innenseite 113 des Anschlusselementes 110 und dem wenigstens einen Permanentmagneten 130 ist eine die Gewindebuchse 140 an der Innenseite 113 des Anschlusselementes 110 abdeckende Stützscheibe 160 angeordnet. Auf der von der Gewindebuchse 140 abgewandten Seite des Permanentmagneten 130 weist der Rotorkörper 101 eine weitere Stützscheibe 170 auf, welche im Folgenden auch als äußere Stützscheibe bezeichnet wird. Weiterhin weist das Anschlusselement 110 konzentrisch zu der Drehachse A eine zylindrische Bohrung 150 auf. Der Innendurchmesser D1 der zylindrischen Bohrung 150 ist kleiner ausgebildet als der Innendurchmesser D2 der weiteren Aufnahme 180, wodurch eine Stufe 114 gebildet ist, die eine Auflage 115 für die Gewindebuchse 140 bildet.

Die Gewindebuchse 140 kann vorzugsweise von der Innenseite 113 in die weitere Aufnahme 180 eingesetzt werden. Wie weiterhin in Fig. 2 erkennbar ist, weist die Gewindebuchse 140 ein Innengewinde 142 und einen Außenmantel 141 auf. Der Außenmantel 141 der Gewindebuchse und die Innenwandung 181 der weiteren Aufnahme 180 sind dabei derart ausgebildet, dass der Außenmantel 141 bei einer Drehung um die Drehachse A relativ zu dem Rotorkörper 101 an einer Innenwandung 181 der weiteren Aufnahme 180 zur Anlage gelangt. Dazu kann der Außenmantel 141 einen nicht dargestellten Vorsprung aufweisen, der bei einer Drehung um die Drehachse A relativ zu dem Rotorkörper 101 an einer ebenfalls nicht dargestellten Stufe der Innenwandung 181 zur Anlage gelangt. Beispielseise kann der Außenmantel 141 der Gewindebuchse 140 durch einen Sechskant gebildet sein. Dazu korrespondierend kann die Innenwandung 181 des Anschlusselementes 110 ebenfalls als komplementärer Sechskant gebildet sein. Zusätzlich ist der Innendurchmesser D2 der weiteren Aufnahme 180 etwas größer ausgebildet als der Außendurchmesser der Gewindebuchse 140. Dadurch ist sichergestellt, dass senkrecht zur Drehachse A zwischen der Gewindebuchse 140 und dem Rotorkörper 191 in radialer Richtung ein Spiel S1 besteht, wie in Fig. 2 erkennbar ist. Die Gewindebuchse 140 ist also mit Spiel in die weitere Aufnahme 180 eingelegt, kann aber bei einer Drehung um die Achse A dennoch zur Anlage an der Innenwandung 181 der weiteren Aufnahme 180 gelangen. Alternativ ist es auch möglich, den Außenmantel 141 der Gewindebuchse mit einem harmonisches Dreieckprofil oder P3G-Profil zu versehen. Das harmonische Polygonprofil mit kontinuierlicher P3-Formkurve ergibt ein "Gleichdick" in allen Winkellagen und dadurch ein hochwertiges Profil zur Drehmomentübertragung.

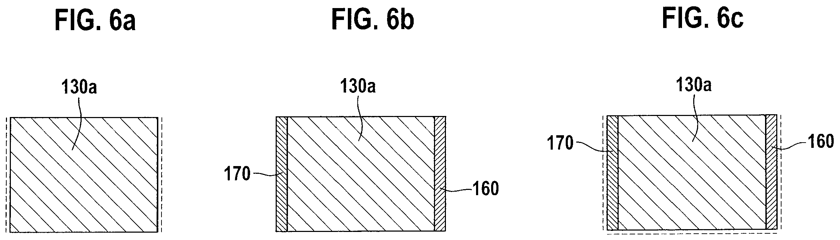

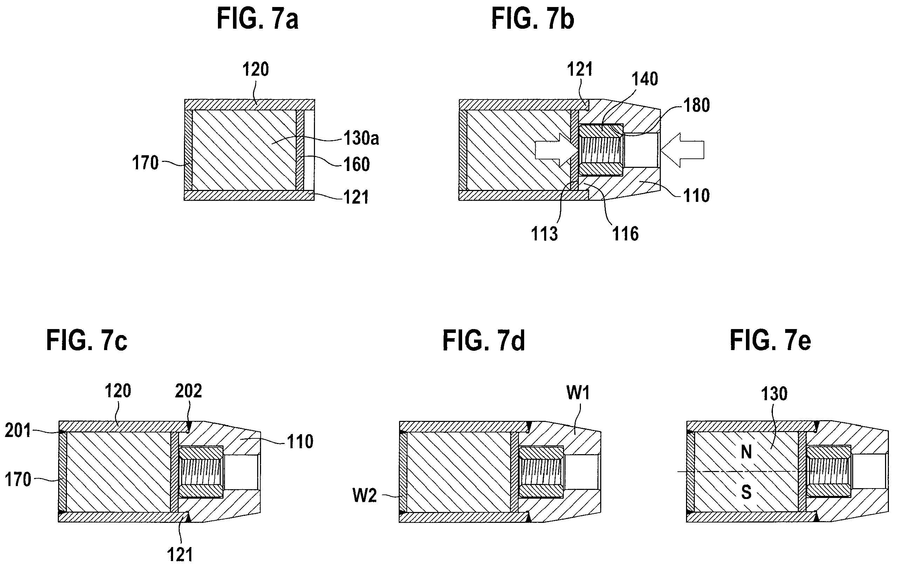

Bevor nun auf die Befestigung des Rotors 100 an der Laderwelle 5 eingegangen wird, wird ein Verfahren zur Herstellung des Rotors 100 und der weitere Aufbau des Rotors 100 anhand der Figuren 6a bis 6c und 7a bis 7e erläutert.

In einem ersten Schritt zur Herstellung des Rotors 100 wird beispielsweise in Fig. 6a ein noch nicht magnetisierter Rohling 130a für den späteren Permanentmagneten 130 mit zylinderförmigen Abmessungen bereitgestellt. Die Stirnseiten des Rohlings 130a werden an den in Fig. 6a durch die gestrichelte Linie dargestellten axialen Stirnseiten abgeschliffen. Sodann wird eine Stützscheibe 160 und eine weitere Stützscheibe 170 auf die voneinander abgewandten Stirnseiten des Rohlings 130a aufgeklebt, wie in Fig. 6b dargestellt ist. Die Stützscheiben 160, 170 können als Stanzteile aus unmagnetischen Material hergestellt und anschließend einer Wärmebehandlung und einem Schleifprozess unterzogen worden sein.

Wie in Fig. 6c dargestellt kann die Baugruppe, bestehend aus dem Rohling 130 und den aufgeklebten Stützscheiben 160, 170 an der Oberfläche einem weiteren Schleifvorgang unterzogen werden. Sodann wird diese Baugruppe, wie in Fig. 7a dargestellt, in die Hülse 120 eingebracht. Dies kann beispielsweise durch Einpressen erfolgen. Ergänzend oder alternativ kann hierbei insbesondere auch eine Wärmebehandlung der Hülse 120 erfolgen. Es ist auch möglich die Hülse aufzuheizen, Baugruppe in die Hülse einzuführen und anschließend den ganzen Verbund abzukühlen. Die Presskraft zwischen Hülse und Permanentmagnet muss ausreichend groß sein, um die erforderlichen Drehmomente übertragen zu können. Die Stützscheiben 160, 170 schützen insbesondere die Kanten des Rohlings 130a vor einer Beschädigung beim Aufpressen der Hülse 120. Die Hülse 120 weist vorzugsweise einen umlaufenden Kragen 121 auf, der als axiale Verlängerung in Richtung der Drehachse A über die Stützscheibe 160 hinaus von der Baugruppe abkragt. Wie in Fig. 7a erkennbar ist, füllt der Rohling 130a den gesamten Raum zwischen der Innenseite der Hülse 120 und den Stützscheiben 160, 170 aus.

Wie in Fig. 7b gezeigt, kann die montierte Magnetbaugruppe aus Fig. 7a an dem zuvor beschriebenen Anschlusselement 110 angeordnet werden. Dabei wird zunächst die Gewindebuchse 140 in die weitere Aufnahme 180 des Anschlusselementes 110 eingesetzt und anschließend die Magnetbaugruppe mit dem Kragen 121 über einen Absatz 116 an der Innenseite 113 des Anschlusselementes geschoben oder gepresst.

Anschließend kann, wie in Fig. 7c gezeigt, der umlaufende Kragen 121 in radialer Richtung mit dem Anschlusselement 110 an der Position 202 umlaufend verschweißt werden. Zusätzlich findet in axialer Richtung oder auch (nicht dargestellt) radialer Richtung ein weiterer Schweißvorgang zwischen dem umlaufenden Rand der weiteren Stützscheibe 170 und der Hülse 120 an der Position 201 statt.

In einem weiteren Schritt, der in Fig. 7d angedeutet ist, kann der fast fertig hergestellte Rotor 100 in Ebenen an den Positionen W1 und W2 von Fig. 7d ausgewuchtet werden.

Schließlich kann, wie in Fig. 7e dargestellt ist, der Rohling 130a magnetisiert werden und dadurch in den Permanentmagneten 130 gewandelt werden.

Wie man nun am besten in Fig. 2 erkennen kann, besteht bei dem fertig hergestellten Rotor 100 zwischen der inneren Stützscheibe 160 und Gewindehülse 140 ein weiteres Spiel S2. Dadurch ist die Gewindehülse 140 in axialer Richtung (also in Richtung der Drehachse A) und aufgrund des Spiels S1 in radialer Richtung (senkrecht zur Drehachse) beweglich und quasi als "schwimmende" Buchse in der weiteren Aufnahme 180 beweglich. Wie in Fig. 2 weiterhin erkennbar ist, kann die zylindrische Außenwand der Hülse 120 mit der Außenwandung 111 des Anschlusselementes 110 insbesondere fluchtend ausgebildet sein, so dass ein insgesamt zylinderförmiger Aufbau des Rotorkörpers 101 besteht, was aber nicht zwingend notwendig ist.

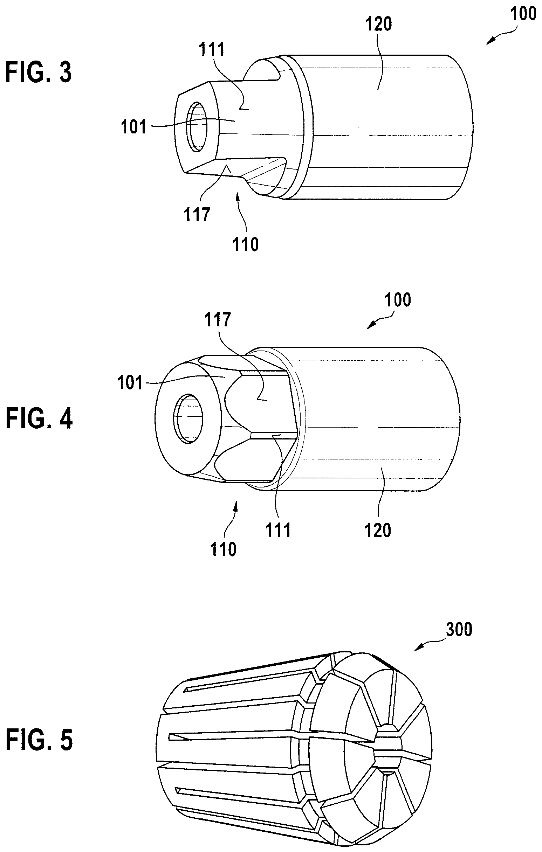

Fig. 3 zeigt eine perspektivische Ansicht eines Rotorkörpers 101 gemäß einem weiteren Ausführungsbeispiel. Zum Erleichtern der Montage des Rotors 100 an der Laderwelle 5 kann der Rotorkörper 101 eine Form aufweisen, die das Ansetzen eines Montagewerkzeugs erlaubt. Wie in Fig. 3 gezeigt, weist der Rotorkörper 101 am Außenmantel 111 des Anschlusselementes 110 eine Schlüsselfläche 117 zum Ansetzen eines Werkzeugschlüssels auf. Bei dem in Fig. 3 gezeigten Ausführungsbeispiel ist die Schlüsselfläche 117 zweiflach-förmig ausgebildet.

Fig. 4 zeigt eine perspektivische Ansicht eines Rotorkörpers 101 gemäß einem weiteren Ausführungsbeispiel. Nachstehend werden lediglich die Unterschiede zu dem Ausführungsbeispiel aus Fig. 3 beschrieben und gleiche Bauteile sind mit gleichen Bezugszeichen versehen. Wie in Fig. 4 gezeigt, kann die Schlüsselfläche 117 sechskantförmig ausgebildet sein. Alternativ kann die Schlüsselfläche 117 vierkant-förmig oder ähnlich ausgebildet sein.

Fig. 5 zeigt eine perspektivische Ansicht einer Spannzange 300. Die Spannzange stellt ein Spannmittel dar, um Werkstücke bzw. Werkzeuge mit hoher Genauigkeit schnell und kraftschlüssig aufzuspannen. Sie besteht aus einer außen kegelförmigen radial geschlitzten Hülse mit einer runden, mitunter auch quadratischen oder sechseckigen Bohrung definierter Größe. Zu einer Spannzange gehört eine Spannzangenaufnahme mit einem zur Spannzange passenden Innenkegel. Gespannt wird durch Anziehen einer Überwurfmutter, mit der die Spannzange in den Innenkegel der Spannzangenaufnahme gedrückt wird. Durch die Schlitzung der Spannzange wird die Bohrung in ihrem Innern gleichmäßig zusammengedrückt, wodurch das Werkstück oder Werkzeug kraftschlüssig festgehalten wird. Spannzangen spannen blanke oder bearbeitete Teile schnell, fest und genau zentrisch. Der Außenmantel 111 des Anschlusselementes 110 kann einen Befestigungsabschnitt zum Befestigen der Spannzange 300 aufweisen. Entsprechend kann der Rotor 100 mittels der Spannzange 300 an der Laderwelle 5 befestigt werden, insbesondere in dem man die Laderwelle im Bereich des Turbinenrades festhält und/oder kontert.

Weiterhin ist es auch möglich, den Rotor 100 im Bereich der weiteren Stützscheibe 170 mit einem Innen-Torx zu versehen (nicht dargestellt), in welchen ein Werkzeug zum aufschrauben des Rotors 100 auf die Laderwelle 5 einsetzbar ist.

Der Rotor 100 kann in allen Ausführungsformen mittels einer Schraubverbindung an die Laderwelle 5 angeschraubt und gleichzeitig beispielsweise mit einem zylindrischen Pressverband zur Drehachse A der Laderwelle 5 ausgerichtet werden. Wie bereits dargestellt, weist das Anschlusselement 110 des Rotors 100 konzentrisch zu der Drehachse A eine zylindrische Bohrung 150 auf. Der Innendurchmesser D1 dieser zylindrischen Bohrung 150 ist zum Ausbilden einer Spielpassung oder einer Übermaßpassung zwischen der Laderwelle 5 und der Innenwandung 151 der Bohrung ausgebildet.

Unter einer "Passung" ist eine maßliche Beziehung zwischen zwei Bauteilen, die ohne Nacharbeit zusammenpassen sollen, zu verstehen. Diese Bauteile haben an der Fügestelle dieselbe Kontur einmal als Innenform und einmal als Außenform. Beide Konturen haben das gleiche Nennmaß. Unterschiedlich sind die beiden Toleranzfelder, innerhalb derer das jeweilige bei der Fertigung entstehende Ist-Maß von Innenform und Außenform liegen muss.

Eine Presspassung ist eine maßliche Beziehung zwischen zwei Bauteilen in Form einer Innenform und einer Außenform, bei der das Größtmaß einer Innenkontur der Außenform in jedem Fall kleiner als ein Kleinstmaß einer Außenkontur der Innenform ist. Die Presspassung kann auch als Übermaßpassung bezeichnet werden. Das Übermaß soll grundsätzlich so gering wie möglich ausgeführt sein aufgrund eines zu erwartenden Drehmomentanstiegs bei einer Montage des Rotors auf der Laderwelle. Das Torsionsmoment kann grundsätzlich steigen je höher die Verpressung gewählt wird.

Die Laderwelle 5 weist an ihrem zur Befestigung des Rotors 100 vorgesehenen Ende einen ersten Abschnitt mit einem Außengewinde 51 auf (Fig. 1). An den mit dem Außengewinde 51 versehenen Abschnitt schließt sich in Richtung der Drehachse A auf der von dem Rotor abgewandten Seite des Außengewindes 51 ein Bereich an, in dem die Laderwelle 5 einen zylindrischen Außenmantel 53 aufweist, welcher als Pressbereich vorgesehen ist. Der zylindrische Außenmantel 53 weist bei dem in Fig. 1 dargestellten Ausführungsbeispiel in diesem Bereich einen Durchmesser D3 auf, welcher größer als der Innendurchmesser D1 der zylindrischen Bohrung 150 ist.

Bei der Festlegung des Rotors 100 an der Laderwelle 5, wird der mit dem Außengewinde 51 versehende Bereich durch die Bohrung 150 des Rotorkörpers 101 hindurchgeschoben und in die Gewindebuchse 140 eingeschraubt. Gleichzeitig wird die Innenwandung 151 der Bohrung 150 auf den zylindrischen Außenmantel 53 aufgepresst.

Beim Aufschrauben des Rotors 100 auf die Laderwelle 5 fungiert die Gewindebuchse 140 als schwimmende Gewindebuchse und erlaubt aufgrund des Spiels S1 einen radialen Toleranzausgleich. Die Gewindebuchse 140 weist ein Innengewinde 142 auf, das ein Innenfeingewinde oder ein Innenregelgewinde sein kann. Das Feingewinde kann gegenüber einem Regelgewinde einen Vorteil hinsichtlich einer höheren Selbsthemmung aufweisen. Das Regelgewinde kann ein standardisiertes Gewinde mit metrischen Abmessungen sein. Üblicherweise weist dieses einen 62° Flankenwinkel auf. Derartige Gewinde sind beispielsweise nach der DIN 13-1 genormt. Das Regelgewinde kann darüber hinaus ein UNF-Gewinde sein. Unter einem "Feingewinde" ist im Rahmen der vorliegenden Erfindung ein Gewinde zu verstehen, das im Vergleich zum Regelgewinde ein engeres Gewindeprofil hat. Zur Unterscheidung wird es üblicherweise zusätzlich zum Außendurchmesser mit dem Maß seiner ebenfalls kleineren Steigung gekennzeichnet.

Bei der Befestigung des Rotors 100 erfolgt die Zentrierung des Rotors relativ zur Drehachse A der Laderwelle 5 mittels der Presspassung zwischen der Innenwandung 151 der Bohrung 150 und dem Außenmantel 53 der Laderwelle 5. Mittels der Gewindebuchse 140 wird eine axiale Spannkraft erzeugt, wobei sich die Gewindebuchse 140 an der Auflage 115 des Anschlusselementes 110 abstützt und dadurch eine Spannkraft erzeugt, welche das Anschlusselement 115 mit seiner Außenseite 112 gegen eine Anschlagsfläche am Verdichterrad 13 anpresst, wie am besten in Fig. 1 zu erkennen ist. Das Verdichterrad 13 stützt sich wiederum an einem Anschlag 52 der Laderwelle 5 ab, so dass das Verdichterrad 13 zwischen dem Anschlag 52 und dem Anschlusselement 110 des Rotors 100 eingespannt wird. Somit kann mittels des Rotors 100 eine definierte axiale Vorspannkraft auf das Verdichterrad vorgenommen werden.

Falls anstelle der Presspassung zwischen der Innenwandung 151 und dem Außenmantel eine Spielpassung verwandt wird, ist eine anschließende Wuchtung der Baugruppe empfehlenswert. Bei einer Spielpassung besteht eine maßliche Beziehung zwischen zwei Bauteilen in Form einer Innenform und einer Außenform, bei der das Größtmaß einer Innenkontur der Außenform etwas größer ist als ein Größtmaß einer Außenkontur der Innenform ist.

## Patentansprüche

1. Rotor für eine elektrische Antriebsmaschine (1) zum Antrieb eines Verdichters (3), einer Turbine (4) oder einer Laderwelle (5) eines Abgasturboladers (2), mit einem um eine Drehachse (A) des Rotors (100) ausgebildeten Rotorkörper (101), wobei an dem Rotorkörper (101) eine Aufnahme (190) für wenigstens einen Permanentmagneten (130) ausgebildet ist, wobei wenigstens ein Permanentmagnet (130) in der Aufnahme (190) des Rotorkörpers (101) angeordnet ist, wobei der Rotorkörper (101) mittels einer Gewindebuchse (140) an einer Laderwelle (5) des Abgasturboladers befestigbar ist, wobei der Rotorkörper (101) eine sich in Richtung Drehachse (A) erstreckende weitere Aufnahme (180) aufweist, in der die Gewindebuchse (140) innerhalb des Rotorkörpers (101) angeordnet ist, wobei die weitere Aufnahme (180) relativ zu der Aufnahme (190) des wenigstens einen Permanentmagneten (130) in Richtung der Drehachse (A) versetzt in dem Rotorkörper (101) angeordnet ist, **dadurch gekennzeichnet, dass** ein Innendurchmesser (D2) der weiteren Aufnahme (180) größer ausgebildet ist als ein Außendurchmesser der Gewindebuchse (140), so dass senkrecht zur Drehachse (A) zwischen der Gewindebuchse (140) und dem Rotorkörper (191) in radialer Richtung ein Spiel (S1) besteht.

2. Rotor nach Anspruch 1, **dadurch gekennzeichnet, dass** die Gewindebuchse (140) ein Innengewinde (142) und einen Außenmantel (141) aufweist und dass der Außenmantel (141) der Gewindebuchse bei einer Drehung um die Drehachse (A) relativ zu dem Rotorkörper (101) an einer Innenwandung (181) der weiteren Aufnahme (180) zur Anlage gelangt.

3. Rotor nach Anspruch 1, **dadurch gekennzeichnet, dass** der Rotor (100) eine den wenigstens einen Permanentmagneten (130) umgebende Hülse (120) aufweist, wobei die Hülse (120) an einem Anschlusselement (110) des Rotorkörpers (101) angeordnet ist, wobei die weitere Aufnahme (180) für die Gewindebuche (140) in dem Anschlusselement (110) angeordnet ist.

4. Rotor nach Anspruch 3, **dadurch gekennzeichnet, dass** das Anschlusselement (110) einen Außenmantel (111), eine dem wenigstens einen Permanentmagneten zuweisende Innenseite (113) und eine davon abweisende Außenseite (112) aufweist und dass die weitere Aufnahme (180) als eine an der Innenseite (113) des Anschlusselementes (110) ausgebildete Absenkung (182) ausgebildet ist.

5. Rotor nach Anspruch 4, **dadurch gekennzeichnet, dass** zwischen der Innenseite (113) des Anschlusselementes (110) und dem wenigstens einen Permanentmagneten (130) eine die Gewindebuchse (140) an der Innenseite (113) des Anschlusselementes (110) abdeckende Stützscheibe (160) vorgesehen ist.

6. Rotor nach Anspruch 5, **dadurch gekennzeichnet, dass** der Rotorkörper (101) auf einer von der Gewindebuchse (140) abgewandten Seite des Permanentmagneten (130) eine weitere Stützscheibe (170) aufweist.

7. Rotor nach einem der vorstehenden Ansprüche, **dadurch gekennzeichnet, dass** der Rotorkörper (101) konzentrisch zu der Drehachse (A) eine zylindrische Bohrung (150) aufweist, wobei der Innendurchmesser (D1) der zylindrischen Bohrung (150) kleiner ausgebildet ist, als ein Innendurchmesser (D2) der weiteren Aufnahme (180), wodurch eine Stufe (114) gebildet ist, die eine Auflage (115) für die Gewindebuchse (140) bildet.

8. Abgasturbolader mit einer elektrischen Antriebsmaschine zum Antrieb eines Verdichters (3), einer Turbine (4) oder einer Laderwelle (5) des Abgasturboladers (2), wobei die Laderwelle (5) um eine Drehachse (A) drehbar gelagert ist, und die elektrische Antriebsmaschine einen Rotor (100) nach einem der Ansprüche 1 bis 7 und einen Stator (20) aufweist, wobei der Stator (20) eine Antriebswicklung (21) zur Erzeugung eines den Rotor (100) antreibenden Antriebsmagnetfeldes aufweist, wobei der Rotorkörper (101) mittels der Gewindebuchse (140) auf ein Außengewinde (51) der Laderwelle (5) derart aufgeschraubt ist, dass eine in Richtung der Drehachse (A) wirkende axiale Spannkraft den Rotorkörper (101) mittelbar oder unmittelbar gegen einen Anschlag (52) an der Laderwelle (5) anpresst.

9. Abgasturbolader nach Anspruch 8, **dadurch gekennzeichnet, dass** die in Richtung der Drehachse (D) wirkende axiale Spannkraft den Rotorkörper (101) gegen ein Verdichterrad (13) des Verdichters (3) und das Verdichterrad (13) wenigstens mittelbar gegen einen Anschlag (52) an der Laderwelle (5) anpresst.

10. Abgasturbolader nach Anspruch 8 oder 9, **dadurch gekennzeichnet, dass** der Rotorkörper (101) konzentrisch zu der Drehachse (A) eine zylindrische Bohrung (150) aufweist, wobei der Innendurchmesser (D1) der zylindrischen Bohrung (150) zum Ausbilden einer Spielpassung oder einer Übermaßpassung zwischen der Laderwelle (5) und der Innenwandung (151) der Bohrung ausgebildet ist.

## Claims

1. Rotor for an electric drive machine (1) for driving a compressor (3), a turbine (4) or a charger shaft (5) of an exhaust turbocharger (2), having a rotor body (101) formed about a rotation axis (A) of the rotor (100), wherein a receptacle (190) for at least one permanent magnet (130) is formed on the rotor body (101), wherein at least one permanent magnet (130) is disposed in the receptacle (190) of the rotor body (101), wherein the rotor body (101) is able to be fastened to a charger shaft (5) of the exhaust turbocharger by means of a threaded bushing (140), wherein the rotor body (101) has a further receptacle (180) which extends in the direction of the rotation axis (A) and in which the threaded bushing (140) is disposed within the rotor body (101), wherein the further receptacle (180) is disposed in the rotor body (101) so as to be offset in the direction of the rotation axis (A) relative to the receptacle (190) of the at least one permanent magnet (130), **characterized in that** an internal diameter (D2) of the further receptacle (180) is designed to be larger than an external diameter of the threaded bushing (140), so that there is a clearance (S1) in the radial direction perpendicular to the rotation axis (A) between the threaded bushing (140) and the rotor body (191).

2. Rotor according to Claim 1, **characterized in that** the threaded bushing (140) has an internal thread (142) and an outer jacket (141), and **in that** the outer jacket (141) of the threaded bushing during rotation about the rotation axis (A) relative to the rotor body (101) comes to bear on an internal wall (181) of the further receptacle (180).

3. Rotor according to Claim 1, **characterized in that** the rotor (100) has a sleeve (120) surrounding the at least one permanent magnet (130), wherein the sleeve (120) is disposed on a connecting element (110) of the rotor body (101), wherein the further receptacle (180) for the threaded bushing (140) is disposed in the connecting element (110).

4. Rotor according to Claim 3, **characterized in that** the connecting element (110) has an outer jacket (111), an inner side (113) facing the at least one permanent magnet, and an outer side(112) facing away from the latter, and **in that** the further receptacle (180) is formed as a countersink (182) formed on the inner side (113) of the connecting element (110).

5. Rotor according to Claim 4, **characterized in that** provided between the inner side (113) of the connecting element (110) and the at least one permanent magnet (130) is a support disc (160) which covers the threaded bushing (140) on the inner side (113) of the connecting element (110).

6. Rotor according to Claim 5, **characterized in that** the rotor body (101) on a side of the permanent magnet (130) facing away from the threaded bushing (140) has a further support disc (170).

7. Rotor according to one of the preceding claims, **characterized in that** the rotor body (101) has, concentrically with the rotation axis (A), a cylindrical bore (150), wherein the internal diameter (D1) of the cylindrical bore (150) is designed to be smaller than an internal diameter (D2) of the further receptacle (180), whereby a step (114) is formed, which forms a support (115) for the threaded bushing (140).

8. Exhaust turbocharger having an electric drive machine for driving a compressor (3), a turbine (4) or a charger shaft (5) of the exhaust turbocharger (2), wherein the charger shaft (5) is mounted so as to be rotatable about a rotation axis (A), and the electric drive machine has a rotor (100) according to one of Claims 1 to 7 and a stator (20), wherein the stator (20) has a drive winding (21) for generating a drive magnetic field driving the rotor (100), wherein the rotor body (101) by means of the threaded bushing (140) is screwed onto an external thread (51) of the charger shaft (5) in such a manner that an axial clamping force acting in the direction of the rotation axis (A) presses the rotor body (101) directly or indirectly against a stop (52) on the charger shaft (5).

9. Exhaust turbocharger according to Claim 8, **characterized in that** the axial clamping force acting in the direction of the rotation axis (D) presses the rotor body (101) against a compressor wheel (13) of the compressor (3), and presses the compressor wheel (13) at least indirectly against a stop (52) on the charger shaft (5).

10. Exhaust turbocharger according to Claim 8 or 9, **characterized in that** the rotor body (101) has, concentrically with the rotation axis (A), a cylindrical bore (150), wherein the internal diameter (D1) of the cylindrical bore (150) is designed to form a clearance fit or an interference fit between the charger shaft (5) and the internal wall (151) of the bore.

## Revendications

1. Rotor pour une machine électrique d'entraînement (1) destinée à entraîner un compresseur (3), une turbine (4) ou un arbre de turbocompresseur (5) d'un turbocompresseur à gaz d'échappement (2), comprenant un corps de rotor (101) formé autour d'un axe de rotation (A) du rotor (100), un logement (190) pour au moins un aimant permanent (130) étant formé sur le corps de rotor (101), au moins un aimant permanent (130) étant disposé dans le logement (190) du corps de rotor (101), le corps de rotor (101) pouvant être fixé à un arbre de turbocompresseur (5) du turbocompresseur à gaz d'échappement au moyen d'une douille filetée (140), le corps de rotor (101) possédant un logement supplémentaire (180) qui s'étend dans la direction de l'axe de rotation (A), dans lequel la douille filetée (140) est disposée à l'intérieur du corps de rotor (101), le logement supplémentaire (180) étant disposé dans le corps de rotor (101) de manière décalée par rapport au logement (190) de l'au moins un aimant permanent (130) dans la direction de l'axe de rotation (A), **caractérisé en ce qu'**un diamètre intérieur (D2) du logement supplémentaire (180) est configuré plus grand qu'un diamètre extérieur de la douille filetée (140), de sorte qu'il existe un jeu (S1) dans le sens radial entre la douille filetée (140) et le corps de rotor (191) perpendiculairement à l'axe de rotation (A).

2. Rotor selon la revendication 1, **caractérisé en ce que** la douille filetée (140) possède un filetage intérieur (142) et une enveloppe extérieure (141) et **en ce que** l'enveloppe extérieure (141) de la douille filetée, lors d'une rotation autour de l'axe de rotation (A) par rapport au corps de rotor (101), vient en appui contre une paroi intérieure (181) du logement supplémentaire (180).

3. Rotor selon la revendication 1, **caractérisé en ce que** le rotor (100) possède un manchon (120) qui entoure l'au moins un aimant permanent (130), le manchon (120) étant disposé au niveau d'un élément de raccordement (110) du corps de rotor (101), le logement supplémentaire (180) pour la douille filetée (140) étant disposé dans l'élément de raccordement (110).

4. Rotor selon la revendication 3, **caractérisé en ce que** l'élément de raccordement (110) possède une enveloppe extérieure (111) un côté intérieur (113) associé à l'au moins un aimant permanent et un côté extérieur (112) opposé à celui-ci, et **en ce que** le logement supplémentaire (180) est réalisé sous la forme d'un renfoncement (182) formé sur le côté intérieur (113) de l'élément de raccordement (110).

5. Rotor selon la revendication 4, **caractérisé en ce qu'**entre le côté intérieur (113) de l'élément de raccordement (110) et l'au moins un aimant permanent (130) est prévue une rondelle d'appui (160) qui recouvre la douille filetée (140) au niveau du côté intérieur (113) de l'élément de raccordement (110).

6. Rotor selon la revendication 5, **caractérisé en ce que** le corps de rotor (101) possède une rondelle d'appui supplémentaire (170) sur un côté de l'aimant permanent (130) opposé à la douille filetée (140).

7. Rotor selon l'une des revendications précédentes, **caractérisé en ce que** le corps de rotor (101) possède, de manière concentrique à l'axe de rotation (A), un alésage cylindrique (150), le diamètre intérieur (D1) de l'alésage cylindrique (150) étant réalisé plus petit qu'un diamètre intérieur (D2) du logement supplémentaire (180), ce qui forme un gradin (114) qui constitue un support (115) pour la douille filetée (140).

8. Turbocompresseur à gaz d'échappement comprenant une machine d'entraînement électrique destinée à entraîner un compresseur (3), une turbine (4) ou un arbre de turbocompresseur (5) du turbocompresseur à gaz d'échappement (2), l'arbre de turbocompresseur (5) étant monté de manière à pouvoir tourner autour d'un axe de rotation (A) et la machine d'entraînement électrique possédant un rotor (100) selon l'une des revendications 1 à 7 et un stator (20), le stator (20) possédant un enroulement d'entraînement (21) destiné à générer un champ magnétique d'entraînement qui entraîne le rotor (100), le corps de rotor (101) étant vissé au moyen de la douille filetée (140) sur un filetage extérieur (51) de l'arbre de turbocompresseur (5) de telle sorte qu'une force de serrage axiale agissant dans la direction de l'axe de rotation (A) presse le corps de rotor (101) directement ou indirectement contre une butée (52) au niveau de l'arbre de turbocompresseur (5).

9. Turbocompresseur selon la revendication 8, **caractérisé en ce que** la force de serrage axiale agissant dans la direction de l'axe de rotation (D) presse le corps de rotor (101) contre une roue de compresseur (13) du compresseur (3) et la roue de compresseur (13) au moins indirectement contre une butée (52) au niveau de l'arbre de turbocompresseur (5).

10. Turbocompresseur selon la revendication 8 ou 9, **caractérisé en ce que** le corps de rotor (101) possède un alésage cylindrique (150) concentrique à l'axe de rotation (A), le diamètre intérieur (D1) de l'alésage cylindrique (150) étant configuré pour former un ajustement avec jeu ou un ajustement avec serrage entre l'arbre de turbocompresseur (5) et la paroi intérieure (151) de l'alésage.
